**Europäisches Patentamt**

**European Patent Office**

**Office européen des brevets**

(19)

(11) Veröffentlichungsnummer: **0 217 216 B1**

(12) # EUROPÄISCHE PATENTSCHRIFT

(45) Veröffentlichungstag der Patentschrift: **27.03.91**

(51) Int. Cl.⁵: **A47L 9/28**

(21) Anmeldenummer: **86112739.7**

(22) Anmeldetag: **16.09.86**

(54) **Staubsauger.**

(30) Priorität: **28.09.85 DE 3534621**

(43) Veröffentlichungstag der Anmeldung:
**08.04.87 Patentblatt 87/15**

(45) Bekanntmachung des Hinweises auf die
Patenterteilung:
**27.03.91 Patentblatt 91/13**

(84) Benannte Vertragsstaaten:
**AT BE CH DE FR GB IT LI LU NL SE**

(56) Entgegenhaltungen:
**EP-A- 0 136 357**
**DE-A- 2 336 758**
**DE-A- 2 946 930**
**DE-A- 3 431 164**
**DE-A- 3 431 175**

(73) Patentinhaber: **Interlava AG**
**Contrada di Sassello 2**
**CH-6900 Lugano 1(CH)**

(72) Erfinder: **Der Erfinder hat auf seine Nennung**
**verzichtet**

(74) Vertreter: **Otte, Peter, Dipl.-Ing.**
**Tiroler Strasse 15**
**W-7250 Leonberg(DE)**

**Beschreibung**

Stand der Technik

Die Erfindung geht aus von einem Staubsauger nach der Gattung des Hauptanspruchs.

Bei einem bekannten Staubsauger gemäß DE-A-2 336 758 wird versucht, in einem bestimmten Bereich der Saugleitung oder des Saugrohres die Luftgeschwindigkeit konstant zu halten und so die Möglichkeit zu schaffen, die von dem Staubsauger angesaugten Stäube, Feststoffteilchen u. dgl. zu messen, d.h. die Staubkonzentration festzustellen. Hierzu sind senkrecht zu dem Luftstrom eine Lichtquelle und eine Fotozelle angeordnet, wobei das Ausgangssignal der Fotozelle über eine Regelvorrichtung die Drehzahl des das Staubsaugergebläse antreibenden Elektromotors beeinflußt.

Dieser bekannte Staubsauger geht daher von der Erkenntnis aus, daß es bei der Betriebssteuerung oder Leistungssteuerung eines Staubsaugers ein sinnvolles Kriterium ist, die Größe auszuwerten, die durch den Staubsauger bei seinem Betrieb auch tatsächlich sinngemäß beeinflußt wird, nämlich der Staubanfall. Die Leistungssteuerung eines Staubsaugergebläsemotors in Abhängigkeit zur Staubkonzentration ist daher eine praxisgerechte Lösung; allerdings enthält die genannte Veröffentlichung keine weitergehenden Angaben über Art, Aufbau, Funktion und mögliche Lösungswege für die Motordrehzahlregelung in Abhängigkeit zur optisch erfaßten Staubkonzentration, wobei im übrigen auch das Bemühen, die Luftströmung im Erfassungsbereich des Saugrohrs konstant zu halten, zu einer praxisgerechten Drehzahlregelung nicht merklich beitragen kann.

Besonders problematisch ist auch die lediglich erwähnte Möglichkeit, mit einer Lichtquelle und einer Photozelle die Steuerung durchzuführen. Hierdurch erzielt man lediglich eine Beobachtung der Staubverhältnisse im Ansaugbereich längs einer Linie, es ergibt sich kein dem tatsächlichen Staubanfall entsprechendes Bild und daher eine entsprechend hohe Ungenauigkeit. Weitere Angaben über die Auswertung der optisch erfaßten Staubkonzentration enthält diese Veröffentlichung nicht. Bekannt ist bei einem gattungs gemäßen Staubsauger (DE-A- 34 31 164), der den Staubanfall erfassenden lichtoptischen Einheit aus Leuchtdiode und Fototransistor nach Verstärkung von dessen Ausgangssignalen ein gleichzeitig eine Impulsformung sowie -verzögerung bewirkendes Schaltglied, nämlich einen Monoflop nachzuschalten, der insbesondere auch zur optischen Anzeige des jeweils festgestellten Staubanfalls optisch mit unterschiedlichen Mitteln (grüne oder rote Leuchtdiode) die gemessene Staubmenge anzeigt und durch erneuten Staubanfall bei Ablauf seiner Standzeit jederzeit nachtriggerbar ist. Über einen dem Monoflop nachgeschalteten und daher auf das Ansteuersignal für die Leuchtdioden reagierenden Auswerteblock ist eine entsprechende gemessene staubanfallveränderbare Leistungsansteuerung des Staubsaugergebläsemotors möglich, wobei auch eine stetige Leistungsaussteuerung in Abhängigkeit zu dem gemessenen Staubanfall vorgenommen werden kann, indem über eine alternative Verbindungsleitung Staubanfall-Signale vor dem Monoflop abgegriffen werden.

Bei einem weiteren bekannten Gerät zum Reinigen textiler Bodenbeläge (DE-A-2 946 930) läßt sich die Drehzahl des das Sauggebläse antreibenden Elektromotors in Abhängigkeit zur Größe des von dem Elektromotor aufgenommenen Laststroms regeln, indem eine Phasenanschnittsteuerung in Verbindung mit Thyristoren Verwendung findet, die mittels eines speziell ausgebildeten Zündstromkreises gezündet werden und im Laststromkreis des Elektromotors liegen.

Schließlich ist es bei einem Bodenstaubsauger bekannt (EP-A-0136357), im Bereich der Saugdüse eine elektrisch angetriebene Klopfbürste vorzusehen, deren Stromversorgung über den Verbindungsschlauch und den Handgriff vom Staubsaugerhauptgehäuse erfolgt. Um von der Bedienungsperson gleichzeitig die Drehzahl des Sauggebläses steuern zu können, besteht die Möglichkeit, durch Überlagerung von Signalen auf dieser elektrischen Verbindungsleitung zum Klopfbürstenmotor dem Gebläsehauptantriebsmotor Ansteuersignale zuzuführen, die von einer entsprechenden Phasenanschnittsteuerung ausgewertet und in Drehzahlsteuersignale für den Gebläseantriebsmotor umgesetzt werden.

Der vorliegenden Erfindung liegt die Aufgabe zugrunde, den bekannten Staubsauger so zu verbessern, daß trotz entscheidender Vereinfachung der an der Auswertung beteiligten Schaltkomponenten ausschließlich auf die jeweils gemessene Staubmenge in der Leistungssteuerung des Gebläsemotors reagiert und eine schnelle und verzögerungsfreie Regelung in der Drehzahl sichergestellt ist.

Vorteile der Erfindung

Der erfindungsgemäße Staubsauger löst diese Aufgabe mit den kennzeichnenden Merkmalen des Hauptanspruchs und hat den Vorteil, daß bei besonders einfachem Aufbau der optoelektrischen Steuerschaltung für die Drehzahlregelung in Abhängigkeit zur gemessenen Staubkonzentration schnell und zuverlässig auf Änderungen im Meßergebnis reagiert und ausschließlich mit Bezug auf den effektiven Staubanfall oder die Staubkonzentration die Drehzahlregelung kontinuierlich, also stufenlos den durch Messung erfaßten Arbeitsverhältnissen angepaßt wird. Dabei können alle sonstigen, bisher für relevant erachteten Bedingungen bei dem Betrieb eines Staubsaugers, wie Bodenbeschaffenheit, Nebenluft u. dgl., außer Betracht bleiben, da durch die erfindungsgemäße Lösung dynamisch auf die Wirksamkeit des Staubsaugens, also der tatsächlichen Stauberfassung abgestellt wird. Die erfindungsgemäße Schaltung spricht dabei auf Impulse entsprechender Höhe an und ändert direkt über ein lichtoptisches Glied einen Widerstandswert in dem Ansteuerzweig, beispielsweise eines Triacs, der nach Art einer Phasenanschnittsteuerung die dem Elektromotor zugeführte Leistung entsprechend vorgibt.

Durch die in den Unteransprüchen aufgeführten Maßnahmen sind vorteilhafte Weiterbildungen und Verbesserungen des im Hauptanspruch angegebenen Staubsaugers möglich. Besonders vorteilhaft ist die Anordnung der lichtoptischen Stauberfassungseinrichtung an der Lufteintrittsöffnung des Staubsaugergehäuses oder in deren Bereich, so daß es nicht erforderlich ist, mit dieser Meßeinrichtung etwa in den Saugschlauch oder in den Handgriffbereich zu gehen, was lediglich bedeuten würde, daß man die dort erfaßten Signale über die normalerweise notwendige Drehanschlußverbindung zum Staubsaugergehäuse bringen müßte. Da der vom Staubsauger jeweils angesaugte Staub über die Saugleitung sich gleichermaßen an der Lufteintrittsöffnung des Gehäuses wiederfindet, ergibt sich durch die Messung im Gehäusebereich auch kein Nachteil. Vorteilhaft ist ferner in diesem Zusammenhang, daß zur möglichst umfassenden Messung des Staubanfalls eine größere Anzahl von lichtelektrischen Einheiten im Meßbereich angeordnet werden, beispielsweise also über den Umfang verteilt jeweils abwechselnd Lichtsender in Form von Leuchtdioden und Lichtempfänger in Form von Phototransistoren, die sich dann jeweils in der Verteilung in Paaren so gegenüberliegen, daß im wesentlichen der volle Saugquerschnitt zur Auswertung der tatsächlichen Staubkonzentration erfaßt wird. Unter diesen Umständen ist auch eine in der an erster Stelle genannten Veröffentlichung entsprechend DE-OS 2 336 758 noch vorgesehene Konstanthaltung des Luftstroms im Meßbereich irrelevant, da auf jeden Fall auch kleinere Staubmengen sicher erfaßt und ausgewertet werden können.

Die Erfindung bietet sich ferner in vorteilhafter Weise zur kombinierten Anwendung mit einer manuellen Leistungsumschaltung bei Staubsaugern an, so daß de Bedienungsperson in der Lage ist, für bestimmte Bereiche bestimmte Leistungsanforderungen zu stellen, also etwa Gardinen absaugen, Florteppich, Linoleumfußboden, wobei dann die vollautomatische, durch lichtoptische Abtastung arbeitende Regeleinrichtung nach vorliegender Erfindung die Aufgabe übernimmt, innerhalb dieser jeweiligen Leistungsstufen kontinuierlich je nach anfallender Staubkonzentration drehzahlregelnd den Betrieb zu steuern.

Zeichnung

Ein Ausführungsbeispiel der Erfindung ist in der Zeichnung dargestellt und wird in der nachfolgenden Beschreibung näher erläutert. Es zeigen:

Fig. 1    die Auswerteschaltung für die Gebläsemotor-Drehzahlregelung und

Fig. 2    schematisiert im Querschnitt die lichtoptische Meßstelle zur Erfassung der Staubkonzentration vorzugsweise an der Lufteintrittsöffnung des Staubsaugergehäuses.

Fig. 3    eine Variante der Schaltung der Fig. 1 mit Ansteuerung über Monoflop

Beschreibung der Ausführungsbeispiele

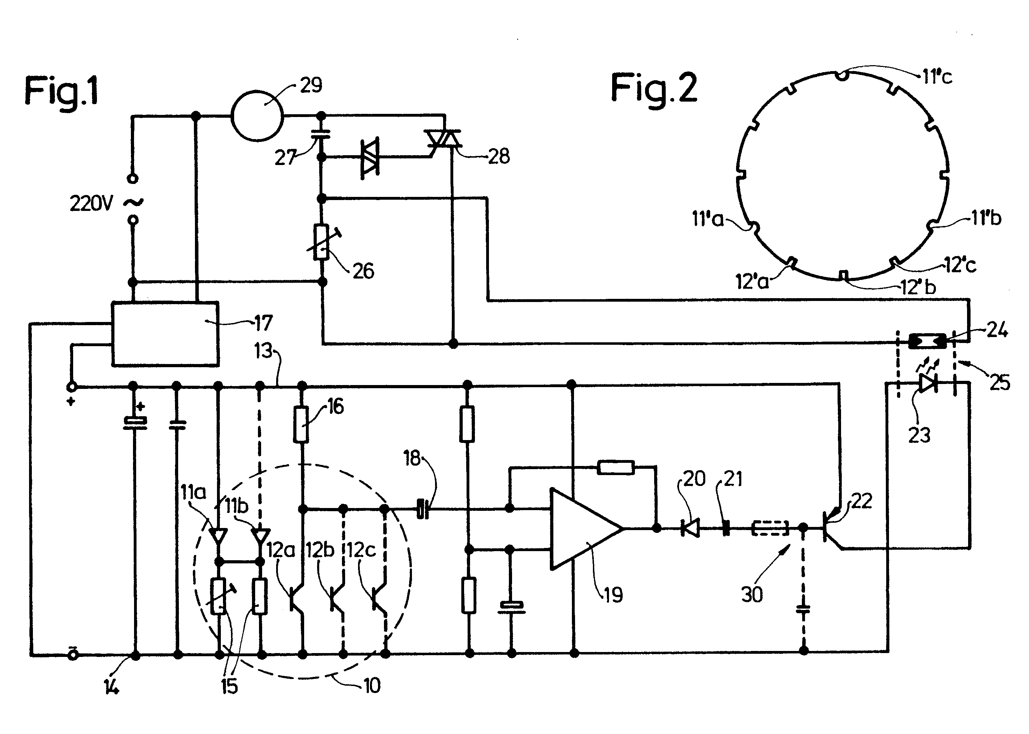

In Fig. 1 ist die optoelektrische Meßeinheit zur Erfassung der Staubkonzentration mit 10 bezeichnet; sie besteht aus mindestens einer, vorzugsweise. einer größeren Anzahl von Licht, insbesondere auch Infrarotlicht aussendenden Leuchtdioden (LED), die mit 11a, 11b ... bezeichnet sind, und einer entsprechenden, gegebenenfalls aber auch größeren Anzahl von lichtempfindlichen, insbesondere auf Licht im Infrarotbereich empfindlichen Fototransistoren 12a, 12b, 12c ..., wobei die mindestens eine Leuchtdiode 11a, 11b ... und der mindestens eine Fototransistor 12a, 12b ... an eine Gleichstromversorgung (positive Spannungsleitung 13, negative Spannungsleitung 14) angeschlossen ist und jeweils in Reihe mit Vorschaltwiderständen 15 bzw. 16 liegen, wobei insbesondere für die Leuchtdioden 11a, 11b auch einstellbare Vorschaltwiderstände vorgesehen sein können.

Die Stromversorgung für die optoelektrische Meßeinheit 10 für die Erfassung der Staubkonzentration erfolgt, da diese mit besonderem Vorteil in der Lufteintrittsöffnung, aber schon im Staubsaugergehäuse angeordnet ist, über ein geeignetes Netzgerät 17 von der ohnehin im Staubsaugergehäuse vorhandenen Netzspannung, so daß sich hier auch der Vorteil des Verzichts auf die Notwendigkeit ergibt, innerhalb des flexiblen Saugschlauchs mit Steuerleitungen arbeiten zu müssen oder die beispielsweise im Handgriff erfaßten Leistungssteuersignale über elektrische Leitungen und die Drehverbindung zwischen Staubsaugergehäuse und dem Anschlußschlauch zur Drehzahlregelung zu bringen.

Ein bevorzugtes Ausführungsbeispiel der Konfiguration in der Umfangsverteilung der Lichtsender und Lichtempfänger im Bereich der Lufteintrittsöffnung des Staubsaugergehäuses ist in Fig. 2 dargestellt, und man erkennt, daß über den Umfang verteilt drei Lichtsender, also Leuchtdioden 11a', 11b', 11c' sowie in diesem Fall die dreifache Anzahl von das Licht der jeweils gegenüberliegenden, also jeweils zugeordneten Leuchtdioden erfassenden Lichtempfänger 12a', 12b', 12c' vorgesehen sind, wobei es sich versteht, daß Art, Zuordnung und Verteilung der jeweiligen Lichtsender und Lichtempfänger über den Umfang der Meßquerschnittsöffnung vollkommen beliebig ist, jedoch mit der Maßgabe, daß eine möglichst umfassende Überdekkung der Querschnittsfläche erreicht wird.

In diesem Zusammenhang können daher Lichtsender und Lichtempfänger jeweils paarig zueinander angeordnet werden derart, daß sie sich über die Querschnittsöffnung jeweils gegenüberliegen, oder es ist möglich, einem Lichtsender eine größere Anzahl von Lichtempfängern zuzuordnen, die dann innerhalb des ausgesandten Lichtöffnungskegels angeordnet sind.

Die Vielzahl der Lichtempfänger über dem Meßquerschnitt können zur Auswertung problemlos einfach parallel geschaltet werden, wie dies in der Darstellung der Fig. 1 durch gestrichelte Linienführung bei den Fototransistoren 12b, 12c angedeutet ist; die zusammengeführten Anschlüsse übertragen ihre Signale dann über einen Kondensator 18 auf den einen Eingang eines nachgeschalteten Verstärkers 19, der auch als schwellwerterzeugendes Mittel eingesetzt werden kann, so daß nur Signale oder zusammengefaßte Signale, die eine vorgegebene Amplitude übersteigen, über den Ausgang zu einer nachgeschalteten Diode 20 gelangen, die ebenfalls mit einer vorgegebenen Durchbruchspannung einen Schwellwert bildet. Über einen der Diode 20 nachgeschalteten Kondensator 21 sind dann die von den Fototransistoren 12a,12b,12c ... erzeugten, ausschließlich auf die Staubbewegung zurückzuführenden dynamischen Impulse (Ankopplung über Kondensator 21) auf die Steuerelektrode eines nachgeschalteten vom Ausgang des (Operations)Verstärkers 19 kontinuierlich nach Staubmenge durchgesteuerten Transistors 22 geführt, in dessen Kollektorkreis eine weiter lichtemittierende Diode 23 angeordnet ist. Die Diode 23 bildet mit einem zugeordneten lichtempfindlichen Widerstand (LDR-Widerstand 24) ein optoelektrisches Kopplungsglied 25, was gleichzeitig auch eine galvanische Trennung beinhaltet, und steuert gleichzeitig, da der lichtempfindliche Widerstand 24 ein Parallelwiderstand 26 in dem Ansteuerkreis aus Kondensator 27 und dem Widerstand 26, 24 für einen Triac 28 ist, über die so gebildete Phasenanschnittschaltung den Motorstrom für den Gebläsemotor 29 des Staubsaugers. Wie eingangs erwähnt, können hier auch weitere Mittel zum Einsatz kommen.

Die erfindungsgemäße Drehzahlsteuerung in Abhängigkeit zur gemessenen Staubkonzentration reagiert äußerst schnell auf Änderungen im Staubanfall und bildet daher auch eine praxisgerechte Ausführungsform, mit welcher sich eine besonders sinnvolle und Energie- und Arbeitskosten ersparende Reinigung durchführen läßt. Es wird lediglich dynamisch auf Impulse reagiert, die durch die einzelnen Staubpartikel verursacht sind - es ergibt sich aber eine gewisse Beruhigung und Normalisierung im Schaltablauf durch die über einen Kondensator 21 erfolgende Ansteuerung des Transistors 22, wobei im übrigen auch der fotoempfindliche Widerstand 24 im Ansteuerkreis für den Triac 28 leicht integrierend wirkt, da er eine gewisse Reaktionsverzugszeit auf Änderungen in der Lichthelligkeit aufweist, die allerdings im Millisekunden-Bereich liegt. Je nach der gewünschten Charakteristik der Drehzahlregelung ist es selbstverständlich möglich, beispielsweise in der Ansteuerung des Transistors 22 noch ein integrierendes RC-Glied 30 anzuordnen, wie dies gestrichelt dargestellt ist.

Da es gegebenenfalls erwünscht sein kann, bei tatsächlich vorhandenem und gemessenem Staubanfall auf jeden Fall mit voller Leistung zu arbeiten, besteht ein zweites bevorzugtes Ausführungsbeispiel der Erfindung darin, ab Ausgangssignal des Operationsverstärkers 19 ein Schaltungselement nachzuschalten, welches, in Abweichung zur stetig analogen Regelung und Aufsteuerung des Elektromotors über die Triac-Schaltung, lediglich die beiden Ausgangszustände "voll durchgesteuert" bzw. "nicht angesteuert" kennt. In letzterem Fall läuft dann der Gebläsemotor 29 des Staubsaugers mit entsprechend reduzierter Drehzahl, da der Parallelwiderstand 24 praktisch herausgeschaltet ist.

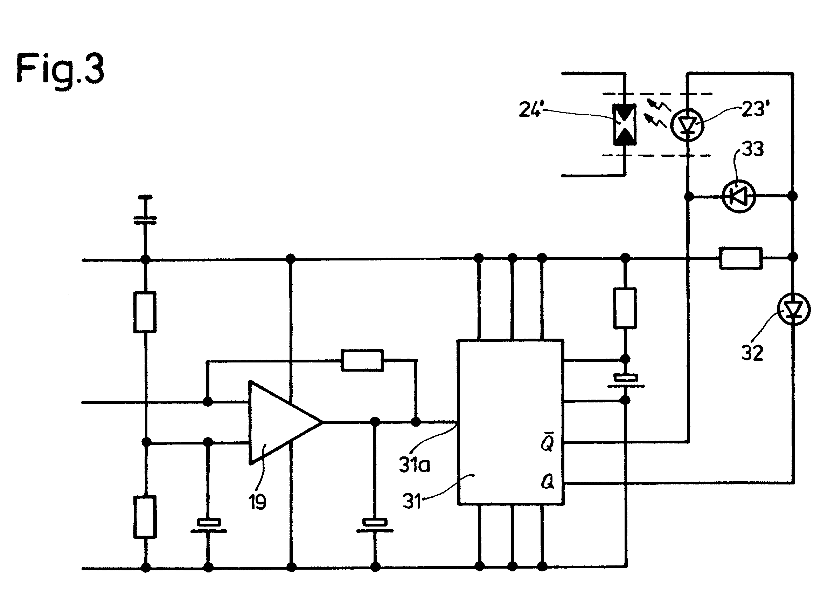

Die Darstellung der Fig. 3 zeigt als Teildarstellung den Operationsverstärker 19, der den Steuereingang 31a eines nachgeschalteten Monoflops 31 ansteuert. Der Monoflop 31 wirkt als Impulse bzw. Impulsfolgen am Ausgang des Operationsverstärkers 19 verstetigende Impulsformer- und gleichzeitig als Verzögerungsstufe für die Ansteuerung der Phasenanschnittsteuerung. Im nichtangesteuerten Zustand ergibt sich beispielsweise hochliegendes Ausgangssignal am Ausgang Q des Monoflops 31, so daß lediglich eine auch der optischen Anzeige der Stauberkennung dienende erste Leuchtdiode 32, die beispielsweise grün aufleuchtet, angesteuert ist.

Fallen Staubpartikel an, dann wird der Monoflop 31 getriggert; er schaltet um, und er zeigt an seinem Ausgang $\overline{Q}$ hochliegendes Signal, welches einmal eine zweite Anzeigeleuchte 33 zum Aufleuchten bringt, die beispielsweise als rote Anzeigeleuchte auch optisch für den Benutzer auf entsprechenden Staubanfall hinweist und dann gleichzeitig, wie auch bei dem Ausführungsbeispiel der Fig. 2, die zu der roten Anzeigeleuchte oder Leuchtdiode 33 parallele Leuchtdiode 23' ansteuert, so daß diese voll aufleuchtet und den zugeordneten lichtempfindlichen Widerstand 24' im Ansteuerkreis für den Triac 28 voll aussteuert.

Der Benutzer eines solchen Staubsaugers erhält damit immer dann, wenn Stauberkennung vorliegt, einen voll innerhalb des jeweils vorgegebenen Rahmens ausgesteuerten Staubsauger, so daß bei Staubanfall auch mit der jeweils verfügbaren Leistung bzw. der hier evtl. noch manuell gestuft vorgebbaren, also jeweils gewählten Leistung, aber immer der maximalen Leistung von der Stauberkennungsschaltung her, gefahren wird. Diese volle Leistungsansteuerung hält solange an, wie Staubanfall erkannt wird, woraufhin dann abgesteuert wird, so daß auch durch diese akustisch deutlich wahrnehmbaren Änderungen im Arbeitsverhalten des Staubsaugers und seiner Ansteuerschaltung für den Benutzer wahrnehmbar wird, daß er den Säuberungsvorgang hinreichend betrieben hat und jetzt an einer anderen Stelle weitermachen kann. Dies wird dann sofort durch ein erneutes Hochfahren in die Vollaussteuerung, also auch akustisch deutlich wahrnehmbar, durch den Staubsauger beantwortet.

Diese akustische Wahrnehmbarkeit wird durch die erwähnten Leuchtdioden 32 und 33, die zusätzlich an den Ausgängen Q und $\overline{Q}$ des Monoflops 31 angeschlossen sind, noch entsprechend unterstützt.

Schließlich besteht die Möglichkeit, anstelle des sofort im Ansteuerkreis für den Triac angeordneten lichtempfindlichen Widerstand 24 eine weitere, insofern allerdings kompliziertere Ansteuerversion zu wählen, die das Licht der Leuchtdiode 23, 23' zwar wiederum von einem Phototransistor erfaßt, dann jedoch, zunächst nach Verstärkung, der Ansteuerung eines Vortriacs dient, der über eine Gleichrichterbrücke und einen zwischengeschalteten, galvanisch trennenden Übertrager einen Widerstand parallel zu dem vorhandenen Widerstand 26 projiziert, der sich aus der jeweiligen Leitfähigkeitssteuerung des zusätzlichen Triacs ergibt. Solche Schaltungen sind für sich gesehen bekannt und werden dann angewendet, wenn eine Widerstandssteuerung für eine Wechselspannung erforderlich ist.

## Ansprüche

1. Staubsauger für Industrie und Haushalt, mit einem Gehäuse und einem ein den Arbeitsunterdruck erzeugendes Gebläse antreibenden Elektromotor (29), gegebenenfalls mit Handführungsmittel für die Bewegung einer Saugdüse über das zu reinigende Material, wobei im Bereich eines beim Arbeiten des Staubsaugers von den aufgenommenen Feststoffteilchen, Stäuben, Fäden u.dgl. durchströmten Saugkanals mindestens ein Lichtsender (11) und mindestens ein Lichtempfänger (12a, 12b, 12c...) angeordnet und dem Lichtempfänger (12) zur Leistungssteuerung des Elektromotors (29) eine Auswerteeinrichtung nachgeschaltet ist, die zu Steuerungszwecken die sich je nach der Menge der angesaugten Teilchen und Stäube ergebende Änderung in der Lichtübertragungscharakteristik vom Lichtsender (11) zum Lichtempfänger (12) erfaßt, dadurch gekennzeichnet, daß dem mindestens einen Lichtempfänger (12a, 12b, 12c ...) nach Verstärkung seines Ausgangsimpulssignals ein weiterer Lichtsender (23) nachgeschaltet und diesem ein lichtempfindlicher Widerstand (24) zugeordnet ist, der zur kontinuierlichen Regelung der Staubsaugerleistung gleichzeitig mindestens Teil eines Steuerwiderstandes (26, 24) im Ansteuerkreis einer den Staubsaugermotor in seiner Leistung verändernden Regelschaltung (28) ist.

2. Staubsauger nach Anspruch 1, dadurch gekennzeichnet, daß der mindestens eine Lichtempfänger ein Fototransistor (12a, 12b, 12c ...) ist, dem ein Verstärker (19) nachgeschaltet ist, an dessen Ausgang über eine eine vorgegebene Schwellspannung aufweisende Diode (20) und einen Reihenkondensator (21) ein den als Leuchtdiode (23) ausgebildeten Lichtsender ansteuernder Transistor (22) geschaltet ist.

3. Staubsauger nach Anspruch 1 oder 2, dadurch gekennzeichnet, daß der von der Leuchtdiode (23) angesteuerte lichtempfindliche Widerstand (24) zu dem Widerstand (26) eines den Ansteuerkreis für den Triac (28) im Motorstromkreis bildenden RC-Gliedes (27; 26, 24) parallelgeschaltet ist.

4. Staubsauger nach einem der Ansprüche 1 bis 3, dadurch gekennzeichnet, daß mehrere als Leuchtdioden ausgebildete Lichtsender (11a, 11b ...) im Bereich der Lufteintrittsöffnung im Staubsaugergehäuse und diesen zugeordnet mindestens jeweils ein, vorzugsweise mehrere im Öffnungskegel jeder Leuchtdiode angeordnete Fototransistoren (12a, 12b, 12c) vorgesehen sind, wobei die Stromversorgung für diese elektrooptische Staubkonzentrations-Meßeinheit (10) und die nachgeschaltete Auswerteschaltung bis zum lichtempfindlichen Steuerwiderstand (24) im Ansteuerkreis des Triacs (28) durch unmittelbare Herabsetzung und Gleichrichtung der Netzversorgungsspannung für den Staubsauger gebildet ist.

5. Staubsauger nach Anspruch 1, dadurch gekennzeichnet, daß dem mindestens einen Lichtempfänger ein Operationsverstärker (19) zur Impulsverstärkung und diesem ein monostabiles Kippglied (31) nachgeschaltet ist, welches bei Überschreiten einer vorgegebenen Staubanfallmenge als Eingangsschwellwert in seinen instabilen Zustand getriggert wird und an seinem einen Ausgang ($\overline{Q}$) die nachgeschaltete Leuchtdiode (23') voll ausgesteuert zur entsprechend vollen Aussteuerung des von dieser angesteuerten lichtempfindlichen Widerstands (24') (Fig. 3).

6. Staubsauger nach Anspruch 5, dadurch gekennzeichnet, daß parallel zur bei Vollansteuerung ausgesteuerten Leuchtdiode (23') eine diesen Zustand der Stauberkennung optisch dem Benutzer signalisierende Anzeigeleuchte (rote Leuchtdiode 33) geschaltet ist.

7. Staubsauger nach Anspruch 5 oder 6, dadurch gekennzeichnet, daß mit dem anderen bei fehlender Stauberkennung hochliegenden Ausgang (Q) des Monoflops (31) eine diesen Zustand anzeigende Leuchte (32) verbunden ist.

8. Staubsauger nach einem der Ansprüche 1 bis 7, dadurch gekennzeichnet, daß zusätzlich eine manuelle, vom Benutzer des Staubsaugers betätigbare Umschalteinrichtung zur stufigen Leistungsumschaltung des Staubsaugergebläsemotors durch Kontaktbetätigung, pneumatische Drucktastenbetätigung über separate pneumatische Steuerleitungen, Fußschalter, Schrittfortschaltwerke, Druckschalter im Arbeitsluftstrom u.dgl. vorgesehen ist derart, daß die automatische, auf lichtoptischer Staubkonzentrationserfassung beruhende kontinuierliche oder über Monoflop stufige Regelung innerhalb der stufig vorgegebenen Leistungsbandbreite regelt.

## Claims

1. A vacuum cleaner for industry and the home, having a housing and an electric motor (29) driving a fan producing the operating underpressure, possibly having hand guiding means for moving a suction nozzle over the material to be cleaned, at least one light transmitter (11) and at least one light receiver (12a, 12b, 12c..... ) being arranged in the area of a suction channel through which the collected solid matter particles, dust, threads and the like flow when the vacuum cleaner is in operation, and an evaluation device being connected subsequent to the light receiver (12) in order to control the power of the electric motor (29) and determining, for control purposes, the alteration in the light transmission characteristic from the light sender (11) to the light receiver (12) which occurs dependent on the quantity of particles and dust which has been sucked in, characterized in that an additional light sender (23) is connected subsequent to the at least one light receiver (12a, 12b, 12c.... ) after amplification of the output pulse signal of the latter, and a light-sensitive resistor (24) is associated with this additional light sender and, in order to constantly regulate the vacuum cleaner power, simultaneously forms at least part of a control resistor (26, 24) in the trigger circuit of a regulating circuit (28) altering the power of the vacuum-cleaner motor.

2. A vacuum cleaner in accordance with Claim 1, characterized in that the at least one light receiver is a phototransistor (12a, 12b, 12c.....) which has connected thereafter an amplifier (19) to the outlet of which there is connected, via a diode (20) having a predetermined threshold voltage and via a series capacitor (21), a transistor (22) triggering the light sender which is in the form of a light-emitting diode (23).

3. A vacuum cleaner in accordance with Claim 1 or 2, characterized in that the light-sensitive resistor (24) triggered by the light-emitting diode (23) is connected in parallel with the resistor (26) of a RC element (27; 26, 24) forming the trigger circuit for the triac (28) in the motor circuit.

4. A vacuum cleaner in accordance with any one of Claims 1 to 3, characterized in that a plurality of light senders (11a, 11b..... ) in the form of light-emitting diodes are provided in the area of the air intake opening in the vacuum cleaner housing, and in each case there is provided at least one, preferably a plurality of phototransistors (12a, 12b, 12c) respectively arranged in the opening cone of each light-emitting diode and associated with the light senders, the power supply for this electrooptical dust concentration measuring unit (10) and the evaluation circuit connected thereafter and running as far as the light-sensitive control resistor (24) in the trigger circuit of the triac (28), is formed by direct reduction and rectification of the mains supply voltage for the vacuum cleaner.

5. A vacuum cleaner in accordance with Claim 1, characterized in that an operational amplifier (19) for pulse amplification is connected after the at least one light receiver and a monostable multivibrator (31) is connected after the operational amplifier and is, when a predetermined quantity of accumulated dust acting as an input threshold value is exceeded, triggered into its unstable state and at one of its outlets (Q) the subsequent connected light-emitting diode (23' ) is completely modulated for the purposes of the correspondingly complete modulation of the light-sensitive resistor (24' ) triggered by the latter (Fig. 3).

6. A vacuum cleaner in accordance with Claim 5, characterized in that an indicating light (red light-emitting diode 33) is connected parallel to the light-emitting diode (23' ) modulated in the case of complete triggering, this indicating lamp optically signalling to the user the aforementioned state of dust detection.

7. A vacuum cleaner in accordance with Claim 5 or 6, characterized in that connected to the other outlet (Q) of the monoflop (31), which outlet is elevated in the absence of dust detection, there is a light (32) indicating this state.

8. A vacuum cleaner in accordance with any one of Claims 1 to 7, characterized in that, in addition, a manual change-over device which can be operated by the vacuum-cleaner user and is for the graduated power-change-over of the vacuum cleaner fan motor by means of contact operation, pneumatic push-button operation via separate, pneumatic control lines, foot switches, advance switching devices, pressure switches in the operational air stream and the like, is provided in such a manner that the automatic, regulating which is based on the light-optical dust-concentration-determination and is continuous or graduated via a monoflop, regulates within the power bandwidth predetermined in a graduated manner.

**Revendications**

1. Aspirateur pour l'industrie et le ménage comportant un boîtier et un moteur électrique (29) entraînant une machine soufflante créant la dépression utile, le cas échéant avec un moyen de guidage manuel pour déplacer la buse d'aspiration sur l'objet à nettoyer, et au niveau d'un canal d'aspiration qui lors de la mise en oeuvre de l'aspirateur est traversé par les particules solides, les poussières, les fils ou analogue, il est prévu au moins un photo-émetteur (11) et au moins un photo-récepteur (12a, 12b, 12c...) et le photo-récepteur (12) est suivi d'un circuit d'exploitation pour commander la puissance du moteur électrique (29), circuit qui détecte à des fins de commande, la variation de la caractéristique de transmission de lumière entre le photo-émetteur (11) et le photo-récepteur (12) en fonction de la quantité de particules et de poussières aspirée, aspirateur caractérisé en ce qu'au moins un photo-récepteur (12a, 12b, l2c...) après amplification de son signal impulsionnel de sortie, commute un autre photo-émetteur (23) auquel est associée une photo-résistance (24) qui pour régler en continu la puissance de l'aspirateur est au moins en même temps une partie d'une résistance de commande (26, 24) du circuit de commande d'un circuit de réglage (28) modifiant la puissance du moteur de l'aspirateur.

2. Aspirateur selon la revendication 1, caractérisé en ce qu'au moins l'un des photo-récepteurs est un photo-transistor (12a, 12b, 12c...) suivi d'un amplificateur (19) dont la sortie est reliée par une diode (20) à tension de seuil prédéterminée et un condensateur série (21) à un transistor (22) commandant le photo-émetteur constitué par une photo-diode (23).

3. Aspirateur selon la revendication 1 ou 2, caractérisé en ce que la résistance (24) photo-sensible commandée par la photo-diode (23) est branchée en parallèle à la résistance (26) d'un élément RC (27 ; 26, 24) formant le circuit de commande du triac (28) du circuit du courant du moteur.

4. Aspirateur selon l'une des revendications 1 à 3, caractérisé en ce que plusieurs photo-émetteurs (11a, 11b...) en forme de photo-diodes sont prévus au niveau de l'ouverture d'entrée d'air du carter de l'aspirateur et à celles-ci sont associés au moins chaque fois et de préférence plusieurs photo-transistors (12a, 12b, l2c) prévus dans le cône d'ouverture de chaque photo-diode, l'alimentation électrique de cette unité de mesure de concentration de poussières (10), électro-optique et le circuit d'exploitation en aval jusqu'à la résistance de commande (24) photo-sensible du circuit de commande du triac (28) étant formés par la réduction directe et le redressement de la tension d'alimentation du réseau de l'aspirateur.

5. Aspirateur selon la revendication 1, caractérisé en ce qu'au moins un photo-récepteur suivi d'un amplificateur opérationnel (19) pour amplifier les impulsions et ce dernier est suivi d'une bascule monostable (31) qui, lors du dépassement d'une quantité de poussières prédéterminée comme seuil d'entrée, est redéclenchée à son état instable et l'une de ses sorties ($\overline{Q}$) commande totalement la photo-diode (23') en aval pour la commande complète correspondante de la résistance photo-sensible (24') commandée par celle-ci (figure 3).

6. Aspirateur selon la revendication 5, caractérisé en ce qu'en parallèle à la photo-diode (23') commandée complètement, il est prévu un voyant (photo-diode rouge 33) signalant cet état de détection optique de la poussière à l'utilisateur.

7. Aspirateur selon la revendication 5 ou 6, caractérisé en ce que l'autre sortie (Q) de la bascule monostable (31) qui est au niveau haut en l'absence de détection de poussières, est reliée à un voyant (32) indiquant cet état.

8. Aspirateur selon l'une des revendications 1 à 7, caractérisé en ce qu'en plus d'un dispositif de commutation à action manuelle par l'utilisateur de l'aspirateur, il est prévu pour la commutation pas à pas de la puissance du moteur de la machine soufflante de l'aspirateur par actionnement d'un contact, actionnement de touche pneumatique par des conduites de commande pneumatique distinctes, des commutateurs à pied, des mécanismes de commutation pas à pas, des pressostats dans le flux d'air utile ou analogues de manière à régler la détection automatique, continue, photo-optique de la concentration de poussières ou encore par une régulation pas à pas par une bascule bistable à l'intérieur de la plage de puissance prédéterminée par gradins.

Fig.2

Fig.1

Fig.3